# EUROPEAN PATENT SPECIFICATION

(11) **EP 1 588 835 B1**
(45) Date of publication and mention of the grant of the patent: **23.12.2009**
(21) Application number: 05008641.2
(22) Date of filing: 20.04.2005
(51) Int. Cl.: B31B 43/00, B31B 37/00, B29C 49/44, B29C 51/28

(54) **Apparatus for forming and shaping a container from a film material**
Vorrichtung zur Herstellung und Formgebung eines Behälters aus einem Folienmaterial
Dispositif pour la fabrication et la formation d'un récipient à partir d'un film

(30) Priority: 21.04.2004 IT BO20040235
(43) Date of publication of application: 26.10.2005
(73) Proprietor: Fioretti, Luigi, 40068 S. Lazzaro di Savena (Bologna) (IT)
(72) Inventor: Fioretti, Luigi, 40068 S. Lazzaro di Savena (Bologna) (IT)
(74) Representative: Dall'Olio, Giancarlo

(56) References cited:
- WO-A-2004/054783
- WO-A-2004/098862
- DE-A1- 2 614 576
- GB-A- 898 387
- US-A- 4 009 982

## Description

The present invention relates to an apparatus for forming and shaping a container from a film material, unwound from related reels according to the preamble of claim 1.

The known apparatuses for forming containers from a film material include an endless conveying line, for moving stepwise a series of elongated elements to move through subsequent work stations, which are arranged in such a way as to face corresponding sections of the line.

The elongated elements are to be covered with tubular elements made from film material unwound from a reel, and consequently the define relative support for the tubular element, which are then formed and shaped to define corresponding containers.

In known devices, each of the elongated elements includes a base, which is fastened to a conveying line, and a tubular, hollow body, which has a plurality of holes, made in its lateral walls.

The shape and cross-section of the tubular hollow bodies correspond to the shape and cross-section of the containers to be obtained.

Moreover, the elongated elements include, between the lower part of the bodies and the upper part of the base, an annular groove, in which a gasket is introduced.

The inside of the base of each elongated element has a pair of conduits, a first conduit, which sets the inside of the relevant body in communication with the outside, and a second conduit, which sets a hole, made in the annular groove, in communication with the outside.

The work stations facing subsequent sections of the conveying line include:
- a first station, where the tubular elements are formed from a film material unwound from the related reel, to be fitted on the elongated elements;
- further stations, respectively for welding the outer end of the tubular elements, to define a relative bottom, and for folding and shaping the bottom, to define an open container;
- and a shaping station, in which the lateral walls of the previously obtained open container are formed and shaped in accordance with the desired profile, by introducing a gas under pressure into the elongated elements.

The shaping station includes a mold formed by two semi-shells and a closing element.

The inner walls of the two semi-shells are shaped according to the desired profile, which is to be given to the lateral walls of the container.

When the conveying line puts the elongated elements with the relative containers fitted thereon in the shaping station, the two semi-shells are tightened to each other and the closing element is lowered, to create a closed room with the base of the elongated elements in order to enclose the container within them.

A pneumatic system for feeding gas under pressure is situated in the shaping station, below the conveying line and is to be set in communication with the base of the elongated elements dwelling in the shaping station.

The pneumatic system usually includes a source of compressed gas, for example a source of compressed air, and delivery conduits for connecting the source with the two conduits situated in the base of the elongated elements.

The forming and shaping of the container profile occurs in the following way:
- the source of gas under pressure feeds the second conduit to cause the deformation of the annular gasket, which compresses the lower open portion of the container against a corresponding lower region of the mold to assure the tightness;
- afterwards, the source of gas under pressure feeds the inside of the tubular bodies through the first conduit: the gas acts through the openings and holes made in the walls of the latter on the lateral walls of the containers making them dilate and deform until they adhere to the inner walls of the mold.

Suitable heating and cooling means are connected to the mold.

When the shaping operation is finished, the source of gas under pressure is deactivated.

An example of the known apparatuses is described in the document EP 1.188.542, this document discloses an apparatus according to the preamble of claim 1.

In known apparatuses, during the various operation steps, the inner walls of the tubular elements, of which corresponding containers will be formed, are always and directly in contact with the outer walls of the elongated elements.

This makes it necessary to use only aeriform fluids as
the operating fluid for the shaping of the containers profile, and it can cause different problems and disadvantages.

First of all, the possible impurities present in the gas can contaminate the containers, and thus the products, which will be packaged therein.

Moreover, the use of gas under pressure requires long operation times.

Factually, before shaping the containers, it is necessary to assure the tightness between the source of gas and the bases of the elongated elements by feeding the second delivery conduit to set under pressure the gasket.

Afterwards, when the shaping is finished, the restoration of the initial conditions by removing the gas under pressure from the elongated elements cannot be performed in short time, due to the so-called "elastic-return-effect".

Further, the pressure level obtainable by the use of gas cannot be too high to avoid any risk of blast.

This limits the use of these apparatuses to the formation of containers of film material, which are easily shaped and deformed, such as the ones of plastic type (e.g. polythene, ethylene resin) or of paper type, excluding its use for forming containers of film material of bigger rigidity and/or thickness, such as aluminium (e.g. for producing cans or thicker and more rigid containers).

Document DE2614576 discloses a blow molding apparatus including a core rod support, a core rod assembly comprising a core rod for supporting a parison to be blow moulded, means near one end of the core rod for connecting it with the core rod support, an elastic balloon that fits closely over the core rod when said balloon is deflated, and means for supplying fluid under pressure from the core rod to inflate the balloon and the parison thereof.

Document US 4.009.982 discloses an attachment for a plastic pipe bending machine for automatically and precisely enlarging the end portions of formed plastic pipe for interconnection with other like plastic pipe of same outside diameter.

Document GB 898.387 discloses an apparatus for forming collapsible tubes comprising a female die of frusto-conical internal shape and a male die covered by a rubber sleeve, a cylindrical tube of lead or aluminium being placed round the rubber sleeve before the male die is inserted in the female die and air or liquid being subsequently admitted under pressure through passages in the male die in order to distend the sleeve.

Document WO 2004/054783 discloses a method for the moulding of web- or sheet-like semi-finished pieces, made from open-cell plastic, using a multi-component moulding tool, the tool pieces of which may be displaced relative to each other, towards and away from each other and which define a cavity with at least one mould structure.

Document WO2004/098862 discloses a system and method for blowing hollow plastic bodies by means of stretch-blowing using injection-moulded preforms, the system comprises a stretch rod which is provided with an inner channel that is connected to a liquid inlet pipe.

The object of the present invention is to propose an apparatus for forming and shaping a container from a film material, which avoids the above mentioned drawbacks.

In particular, the main object of the present invention is to propose an apparatus for forming a container, which can use any operative fluid to shape the container profile, in particular fluids in liquid state.

The above mentioned object is obtained in accordance with the contents of claim 1.

Particular embodiments of the invention are the subject of the dependent claims.

The apparatus proposed by the present invention allows to form a container from a film material and shape its profile, the film material having rigidity and thickness bigger than the ones used in the apparatuses of the prior art.

Furthermore, the apparatus according to the present invention allows to shape the containers profile in a shorter time with respect to the times necessary in the apparatuses of the prior art.

The apparatus proposed by the present invention allows to form a container from a film material, which can maintain the inner walls of the container free of any contaminating agent or impurity during the various operation steps.

The characteristic features of the invention will be pointed out in the following description of a preferred embodiment of an apparatus for forming and shaping a container from a film material, presented as a not limiting example, with reference to the enclosed figures, in which:
Figure 1 is a schematic front view of the apparatus for forming and shaping a container from a film material, proposed by the present invention, taken as a whole;
Figure 2 is a considerably enlarged view, with respect to Figure 1, of particularly significant and characteristic elements of the proposed apparatus, shown disconnected one from another;
- Figure 3 is a view, taken in a partial section in order to point out the particularly significant elements of Figure 2, of a work station of the proposed apparatus, in which the profile of an open container, formed in the previous work stations, is shaped:
- Figures 4A and 4B are partially sectioned distinct views of the operation steps of the container profile shaping;
- Figure 5 is a perspective view of an example form of a container formed and shaped by the apparatus proposed by the present invention.

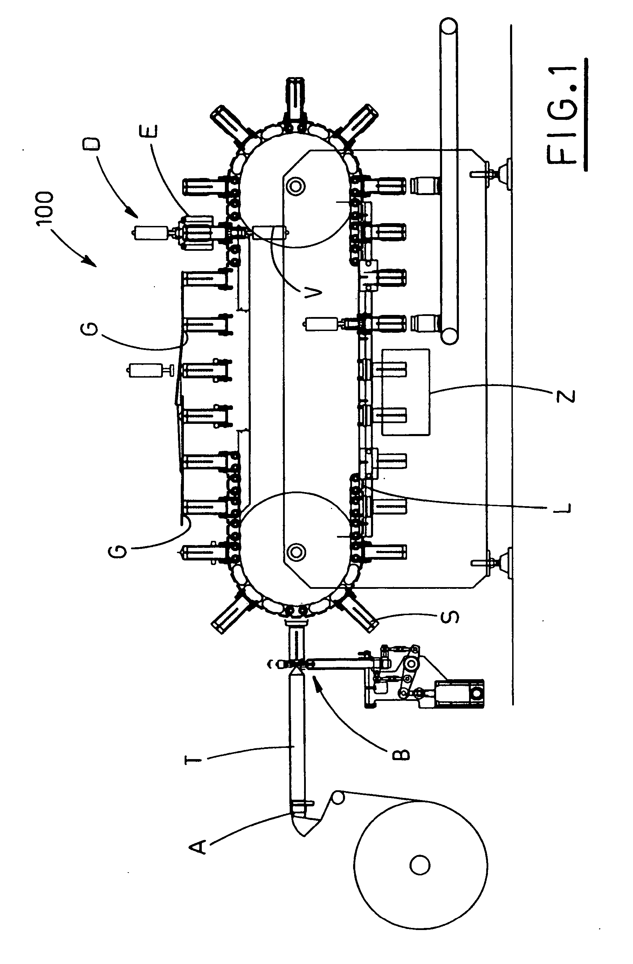

Having regards to the enclosed figures, in particular to Figure 1, the reference numeral 100 indicates the apparatus, proposed by the present invention and taken as a whole, for forming and shaping a container from a film material unwound from a related reel.

The apparatus 100 includes an endless conveying line (L), having elongated support elements S, spaced apart, and operated stepwise to convey the above support elements S through subsequent work stations, which are arranged in such a way as to face the conveying line.

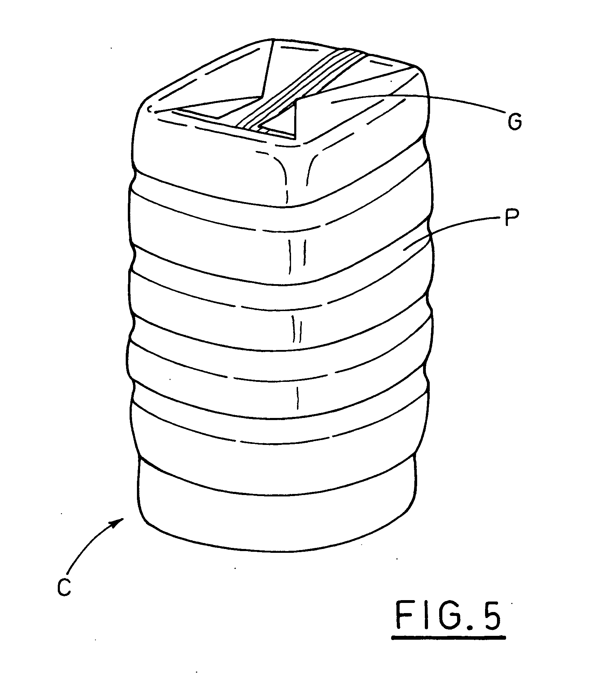

The work stations cooperate with the conveying line (L) to form, from a film material unwound from a relative reel, containers C having a bottom G and a shaped profile P, like e.g. in Figure 5.

In this regard, as it has been shown in an extremely schematic way in Figure 1, the work stations include at least:
a forming station (A) for forming a tubular element (T) from a film material unwinding from the related reel and
for fitting the tubular element (T) onto a corresponding support element (S), which has been positioned in the meantime by the conveying line (L), dwelling in front of the forming station (A);
a closing station (B), situated after the forming station (A) in a conveying direction of the conveying line (L) and aimed at closing the outer end of the tubular element (T) to define a bottom (G), in order to form an open container (C),
a shaping station (D), situated downstream of the closing station (B) in the conveying direction of the conveying line (L) and having a closeable mold (E), in which the container (C) is inserted and kept, and inside which the lateral walls of the container (C) are subjected to deformation and shaping by the use of an operational fluid, which is introduced under pressure into the mold (E) by a supply system (V).

The innovative characteristic of the apparatus (100), proposed by the present invention, with respect to the known apparatuses, lies in the particular conformation of the support elements (S).

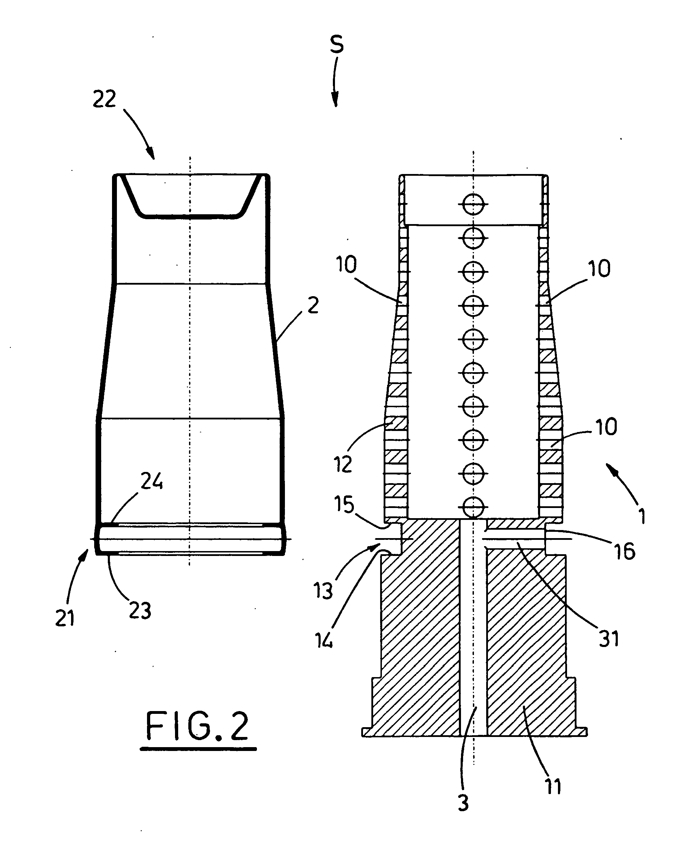

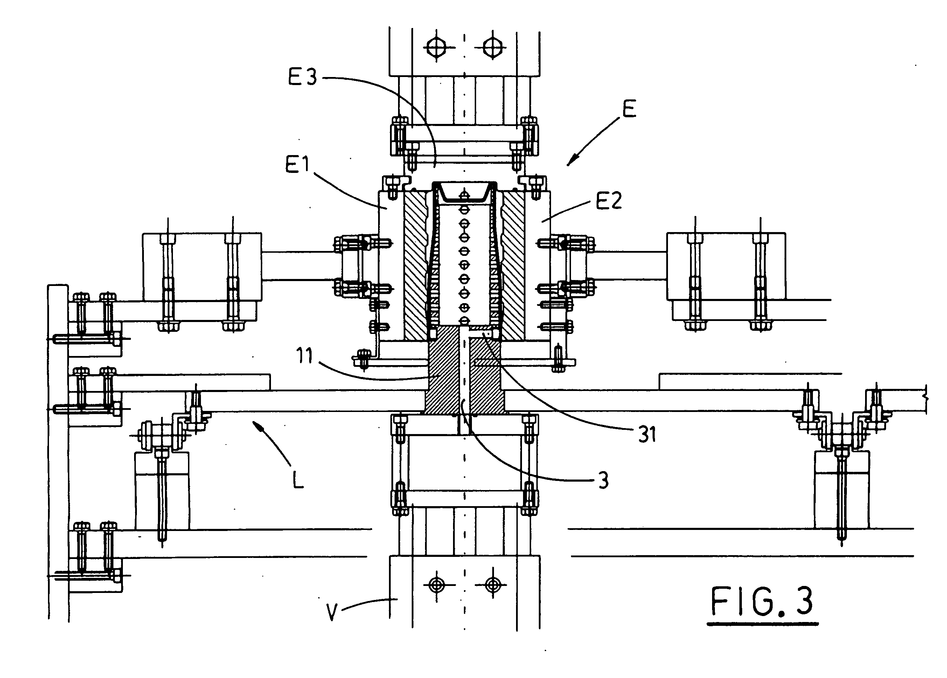

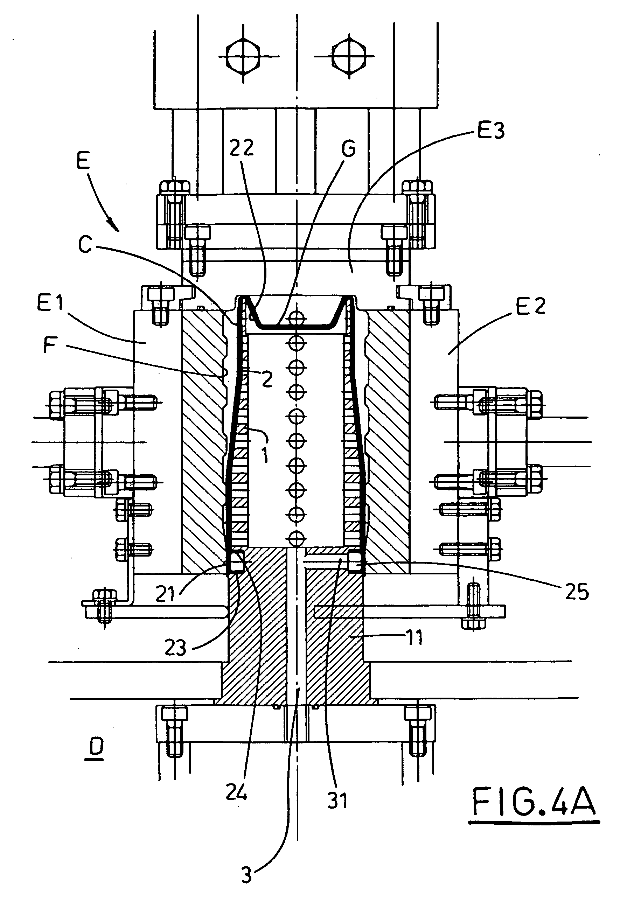

Actually, the characteristic feature of the apparatus (100) lies in the fact that each of the support elements (S) includes a rigid, tubular core (1) and a covering (2), tight proof and elastically deformable, which wraps and covers the tubular core (1) (see for example Figure 2, in which the covering (2) is shown removed from the tubular core (1), while in Figures 3 and 4A, the covering (2) is shown in its operation configuration, in which it covers the tubular core (1) to form a support element (S)).

The tubular core (1) of the support element (S) is set in communication with the supply system (V) when the conveying line (L) moves it to the shaping station (D) and inside the mold (E).

The tubular core (1) of the support element (S) has holes (10), made in its lateral walls for allowing the passage of the operational fluid.

The rest configuration of the covering (2) allows it to surround and cover the tubular core (1), adhering to and mating with the lateral walls thereof.

The covering (2) is to be wrapped by the tubular element (T) to form the open container (C) during the conveying of the support element (S), by the conveying line (L), through the forming station (A) and the closing station (B).

When the support element (S), with the relative container (C) fitted thereon, is disposed in the shaping station (D), inside the mold (E), the covering (2) can undergo an elastic deformation, due to the introduction, by the supply system (V), of the operational fluid under pressure into the tubular core (1), and consequently, detach from the lateral walls of the tubular core (1).

The deformation of the covering (2) caused by the fluid under pressure passing through the holes (10), made in the lateral walls of the tubular core (1), provokes a consequent deformation of the lateral walls of the container (C), fitted onto the latter.

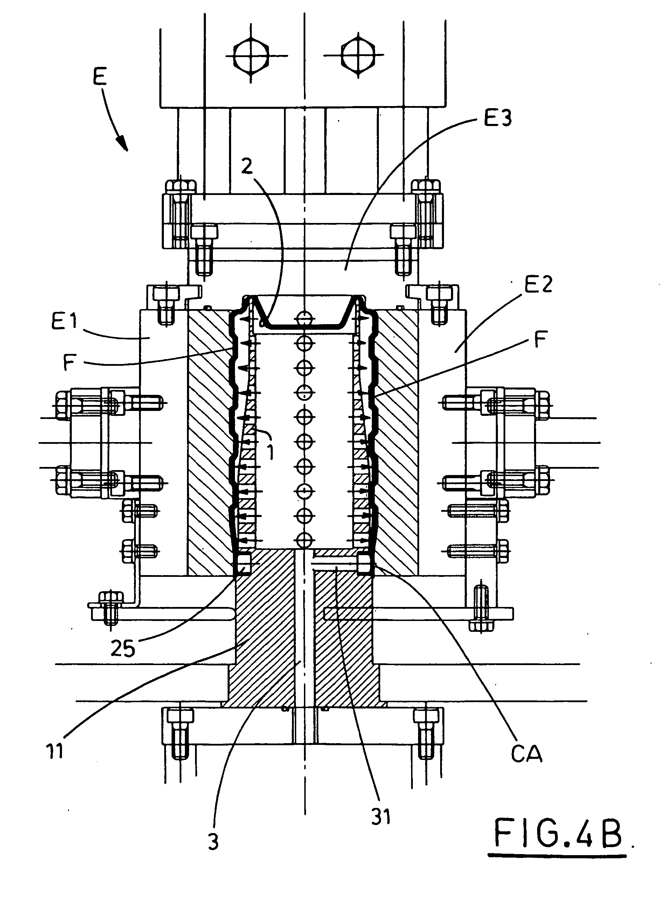

The lateral walls of the container (C) are pushed against the inner shaped walls (F) of the mold (E) to assume a corresponding profile (in this regard, see in particular Figure 4B).

As a consequence of the deactivation of the supply of the fluid under pressure into the tubular core (1), by the supply system (V), the covering (2) can also, due to its elasticity, reassume its initial rest position, in which it adheres to and mates with the lateral walls of the tubular core (1) again (configuration shown in Figure 3 and Figure 4A), so as to make the support element (S) ready to resume the working cycle for forming another container (C).

According to the embodiment shown in the enclosed figures, the tubular core (1) includes a base (11), fastened to the conveying line (L) (Figure 3), and a tubular body (12), which has an elongated shape and a section corresponding to the cross-section of the container (C) to be obtained, and which has the holes (10) made in the relative lateral walls to allow the operational fluid to pass.

The tubular core (1) has an annular groove (13), situated between the upper portion of the base (11) and the lower portion of the tubular body (12).

The covering (2) has the cross-section complementary to the cross-section of the tubular body (12) and it has an inner head (21), partially open, and an outer head (22), closed.

The tubular body (12) passes through the partially open inner head (21) to allow the covering (2) to be positioned on the tubular core (1) in order to cover the latter.

The partially open inner head (21) clutches in a rigid coupling inside the annular groove (13).

The closed outer head (22) is aimed at adhering to the outer end of the tubular body (12) and at being fitted by the bottom (G) of the container (C), giving the latter a corresponding shape (see for example Figure 4A).

Another characteristic feature of the proposed apparatus lies in the fact that the partially open inner head (21) of the covering (2) has a transversal first outer annular lip (23) and a second inner annular lip (24), which involve and adhere, respectively to the lower surface (14) and to the upper surface (15) of the annular groove (13) of the tubular core, defining, between the two lips, a tight proof chamber (25), whose function will be better explained and shown later on (see for example Figure 4A).

The above mentioned base (11) of the tubular core (1) has at least one main conduit (3) extending from the relative lower face and opening into the tubular body (12).

The main conduit (3) sets the inside of the tubular body (12) of the tubular core (1) in communication with the outside when the support element (S) is conveyed and then positioned at the forming station (A) and closing station (B), while it is connected to a delivery conduit of the pressurized fluid supply system (V), when the support element (S) is moved to the shaping station (D) inside the mold (E).

The main conduit (3) has an additional branch conduit (31), which opens into a hole (16) made in the annular groove (13) of the tubular core (1) and which communicates with the tight proof chamber (25) defined by the outer annular lip (23) and inner annular lip (24).

The presence of the additional branch conduit (31) allows, together with the introduction of the pressurized fluid into the tubular core (1) by the supply system (V), through the main conduit (3), to deform the tight proof chamber (25), so as to dilate its outer lateral walls, pushing them toward the inner walls of the mold (E).

Consequently, the dilation of the outer lateral walls of the tight proof chamber (25) pushes the walls (CA) of the open end of the container (C) against the inner walls of the mold (E), thus assuring the perfect air tightness.

As it is shown for example in Figure 3, the mold (E) includes two semi-shells (E1) and (E2), which can be tightened together to enclose the lateral walls of the container (C), whose inner walls (F) are shaped according to the desired profile to be given to the lateral walls of the container (C).

The mold (E) includes also an upper closing element (E3), which can be lowered until it goes in abutment against the bottom (G) of the container (C) and the closed outer head (22) of the covering (2) of the support element (S).

In the tightened configuration, the lower portions of the inner walls (F) of the two semi-shells (E1) and (E2) touch the outer lateral walls of the tight proof chamber (25), thus defining a kind of closed chamber, containing the container (C), whose profile is to be shaped.

The dilation of the tight proof chamber (25) in the above described way, assures the perfect air-tightness of the closed chamber with respect to the outside.

Moreover, the mold (E) includes heating means and cooling means, not shown, since of known type and not included in the scope of the present invention.

The particular conformation of the support elements (S), together with the presence of the covering (2) covering the tubular core (1) make the proposed apparatus particularly innovative, and its use particularly advantageous with respect to the known ones.

Actually, the covering (2), which protects the inner walls of the container (C) from the direct contact with the operational fluid, introduced under pressure into the support element (S) in the shaping station (D), allows to use an operational fluid in liquid state, contrary to the prior art apparatuses.

In fact, the proposed apparatus (100) has a hydraulic supply system (V), situated in the shaping station (D), below the conveying line (L), and introducing, after being joined to the main conduit (3) inside the base (11) of the tubular core (1), a pressurized fluid in a liquid state, into the support element (S).

The hydraulic supply system can introduce into the support element (S) the fluid in the liquid state, which cannot be compressed, with the pressure values considerably higher than the ones reached by the prior art apparatuses, in considerably shorter times, and without any blast risk.

Further, after the profile (P) of the container (C) has been shaped, the restoration of the initial conditions, as a consequence of the deactivation of the hydraulic system, occurs extremely rapidly, because the flow of the liquid fluid from the inside of the support element (S) is quicker with respect to the flow of a compressed gas.

The hydraulic supply system can have valve means for regulating the flow of the liquid fluid, situated along the system delivery conduit to be joined to the main conduit (3).

Likewise, the main conduit (3) can have valve means (not shown), which can be opened or closed to optimize the introduction of the liquid fluid into the support element (S), and/or to adjust the flow of the liquid fluid from the support element (S).

The possibility to reach pressure values higher than the ones reached by the prior art apparatuses allows the apparatus proposed by the present invention to form and shape a container from film materials thicker and more rigid than the plastic and/or paper materials.

Consequently, the proposed apparatus can form and shape a container also from materials like aluminium or tin, to obtain a can or other, similar containers.

Further, the use of a liquid fluid allows to simplify the structure of the base of a support element, which has only one main conduit (3), used for the introduction of the pressurized liquid fluid into the support element (S), as well as for simultaneous activating, by the branch conduit (31), the deformation of the tight proof chamber (25), in order to assure the air-tightness.

However, the above reflections do not exclude the possibility of using the proposed apparatus with pneumatic supply system and thus with aeriform fluids, for shaping the container in the shaping station.

The presence of the covering (2) allows advantageously, as it has already been pointed out previously, to avoid the direct contact between the operational fluid and the inner walls of the container, thus protecting the latter from the contaminations, which can be produced by the impurities present in the fluid.

The proposed apparatus (100) can also include a sterilizing station (Z) (shown with broken line in Figure 1), which is situated between the shaping station (D) and the forming station (A) and through which the support elements (S) pass, moved by the conveying line (L), after having been freed from the relative shaped container.

This way, the covering (2) of the support element (S) is subjected to a sterilizing action before being conveyed to the forming station (A) and being fitted again onto a relative tubular element (T).

Summing up, the apparatus proposed by the present invention, advantageously with respect to the known apparatuses, allows:
- forming and shaping a container from film materials, either plastic or paper, or materials thicker and more rigid, such as aluminium or tin;
- keeping the inner walls of the container being formed and shaped protected from any contamination;
- speeding up the shaping operations in the shaping station, increasing considerably the production rate.

## Claims

1. Apparatus for forming and shaping a container from a film material unwound from a related reel, including:
an endless conveying line (L) provided with elongated support elements (S), spaced apart, and operated to convey each of the support elements (S) to subsequent work stations arranged so as to face the line (L), said stations including a tubular element (T) forming station (A), in which a tubular element (T) is formed and cut from said material and is fitted onto a corresponding support element (S), a closing station (B), in which the outer end of said tubular element (T) is closed to define a bottom (G) to form an open container (C), and a shaping station (D), having a closeable mold (E), within which the container (C) is inserted and contained, and within which the lateral walls of the container (C) are shaped by using an operational pressurized fluid introduced into the mold (E) by a supply system (V), associated to the shaping station (D), with said apparatus (100) **characterized in that** each of said support elements (S) includes:
a tubular rigid core (1), set in communication with said supply system (V) when it is located in said shaping station (D), and having holes (10) made in its lateral walls for the passage of said operational fluid; and
an elastically deformable tight proof covering (2) for surrounding and covering, while in rest condition, the tubular core (1), adhering to and mating with its lateral walls, said covering (2) being fitted by said tubular element (T) to form said open container (C) and undergoing an elastic deformation when said container (C) is located in the shaping station (D) and inside the mold (E), due to introduction, by the supply system (V), of the pressurized operational fluid into the tubular core (1), so as to detach from the tubular core (1) and to accompany the lateral walls of said container (C), making them adhere and mate with the inner shaped walls (F) of said mold (E), in order to assume a corresponding profile, said covering (2) reassuming also, as a consequence of the deactivation of the supply system, its initial rest position, in which it adheres to and mates with the lateral walls of the tubular core (1) again, with said tubular core (1) including a base (11), fastened to said conveying line (L), and a tubular body (12), which has an elongated shape and a cross-section corresponding to the cross-section of the container (C) to be obtained, and which has the holes (10) made in the relative lateral walls to allow the operational fluid to pass, said tubular core (1) having also an annular groove (13), situated between the upper portion of the base (11) and the lower portion of the tubular body (12), having a hole (16) to be set in communication with said supply system (V) and with said covering (2) having the cross-section complementary to the cross-section of said tubular body (12) and having an inner head (21), partially open, through which said tubular body (12) passes to allow the covering (2) to be positioned on the tubular core (1) in order to cover the latter, said partially open inner head (21) introducing in a stable connection inside said annular groove (13) and being fitted by the open end of said container (C), said covering (2) having also a closed outer head (22) adhering to the outer end of said tubular body (12) and being fitted by the bottom (G) of the container (C), giving the latter a corresponding shape, said partially open inner head (21) of said covering (2) including a transversal first outer annular lip (23) and a second inner annular lip (24), which involve and adhere, respectively to the lower surface (14) and to the upper surface (15) of said annular groove (13) of the tubular core (1), defining, between the two lips, a tight proof chamber (25), with said chamber (26) that can be set in communication with said supply system (V) through said hole (16).

2. Apparatus, as claimed in claim 1, **characterized in that** the base (11) of said tubular core (1) has at least one main conduit (3), which sets the inside of the tubular body (12) of the tubular core (1) in communication with the outside during the conveying of the support element (S) to the tubular element (T) forming station (A) and to the closing station (B), where the outer end of said tubular element (T) is closed to define a bottom (G) to form an open container (C), while it is connected to the pressurized fluid supply system (V), when the support element (S) is located, by said conveying line (L), in the shaping station (D) and within the mold (E).

3. Apparatus, as claimed in claim 2, **characterized in that** said main conduit (3) has an additional branch conduit (31), which opens into said hole (16) in the annular groove (13) of said tubular core (1) and which communicates with said tight proof chamber (25), said pressurized operational fluid passing through said additional branch conduit (31) after being introduced in said main conduit (3) by said supply system (V) to deform said tight proof chamber (25), so as to dilate its outer lateral walls and to move the lateral walls of the open end (CA) of the container (C) against the inner walls of the mold (E), to assure its tightness.

4. Apparatus, as claimed in any claim from 1 to 3, **characterized in that** said supply system (V), associated to said shaping station (D), includes a hydraulic supply system and **in that** the operational fluid is a fluid in a liquid state.

5. Apparatus, as claimed in any claim from 1 to 3, **characterized in that** said supply system (V), associated to said shaping station (D) includes a pneumatic supply system and **in that** the operational fluid is a fluid in an aeriform state.

6. Apparatus, as claimed in any claim from 1 to 3, **characterized in that** said mold (E) of said shaping station (D) includes two semi-shells (E1) and (E2), which can be tightened together to enclose the lateral walls of said open container (C), whose inner walls (F) are shaped according to the desired profile to be given to the lateral walls of the container (C), said mold (E) including also an upper closing element (E3), which can be lowered.

7. Apparatus, as claimed in claim 6, **characterized in that** said mold includes heating means and cooling means.

8. Apparatus, as claimed in any claim from 1 to 3, **characterized in that** it includes a sterilizing station (Z), situated between the shaping station (D) and the forming station (A) and through which the support elements (S) pass, moved by the conveying line (L), so that the covering (2) is sterilized.

## Patentansprüche

1. Vorrichtung zum Ausbilden und Formen eines Behälters aus einem Folienmaterial, das von einer zugehörigen Rolle abgewickelt wird, aufweisend:
eine Endlosförderbahn (L), die mit verlängerten, beabstandeten Unterstützungselementen (S) ausgestattet ist und die betrieben wird, um jedes der Unterstützungselemente (S) zu nachfolgenden Arbeitsstationen zu fördern, die angeordnet sind, um der Bahn (L) zugewandt zu sein, während die Stationen umfassen: eine rohrförmige Element (T)-Ausbildestation (A), in der ein rohrförmiges Element (T) ausgebildet, von dem Material geschnitten und an ein entsprechendes Unterstützungselement (S) angepasst wird, eine Schließstation (B), in der das äußere Ende des rohrförmigen Elements (T) geschlossen wird, um einen Boden (G) zu definieren, um einen offenen Behälter (C) auszubilden, und eine Formstation (D) mit einer schließbaren Form (E), in die der Behälter (C) eingesetzt und darin beinhaltet wird und in der die lateralen Wände des Behälters (C) durch Verwenden eines betriebsbereiten, unter Druck gesetzten Fluids geformt werden, das in die Form (E) durch ein Versorgungssystem (V) eingeführt wird, das zugehörig zu der Formstation (D) ist, die Vorrichtung (100) ist **dadurch gekennzeichnet, dass** jedes Unterstützungselement (S) aufweist:
einen rohrförmigen festen Kern (1), der in Verbindung mit dem Versorgungssystem (V) steht, wenn er in der Formstation (D) angeordnet ist, und der Löcher (10) in seinen lateralen Wänden für den Durchgang des betriebsbereiten Fluids aufweist, und
eine elastisch deformierbare dichtsichere Abdeckung (2) zum Umgeben und Abdecken, während sie in einem Ruhezustand ist, wobei der rohrförmige Kern (1) an ihren lateralen Wänden haftet und mit diesen zusammenpasst, während die Abdeckung (2) durch das rohrförmige Element (T) angepasst wird, um den offenen Behälter (C) auszubilden, und die Abdeckung (2) erfährt eine elastische Deformation, wenn der Behälter (C) in der Formstation (D) und innerhalb der Form (E) angeordnet ist, infolge der Einführung des unter Druck gesetzten betriebsbereiten Fluids in den rohrförmigen Kern (1) durch das Versorgungssystem (V), um sich von dem rohrförmigen Kern (1) zu lösen und sich an den lateralen Wänden des Behälters (C) anzulegen, wodurch sie anhaften und zusammenpassen mit den inneren geformten Wänden (F) der Form (E), um ein entsprechendes Profil anzunehmen, während die Abdeckung (2) ebenso, als eine Folge der Deaktivierung des Versorgungssystems, ihre anfängliche Ruheposition einnimmt, in der sie erneut an den lateralen Wänden des rohrförmigen Kerns (1) haftet und mit diesen zusammenpasst, während der rohrförmige Kern (1) aufweist: einen Boden (11), der an der Förderbahn (L) befestigt ist, und einen rohrförmigen Körper (12), der eine verlängerte Form sowie einen Querschnitt aufweist, der dem Querschnitt des Behälters (C) entspricht, der erzeugt werden soll, und der Löcher (10) aufweist, die in den jeweiligen lateralen Wänden vorhanden sind, um es zu gestatten, dass das betriebsbereite Fluid durch fließt, wobei der rohrförmige Kern (1) ebenso aufweist: eine ringförmige Rille (13), die zwischen dem oberen Bereich des Bodens (11) und dem unteren Bereich des rohrförmigen Körpers (12) angeordnet ist und die ein Loch (16) aufweist, das in Verbindung mit dem Versorgungssystem (V) gesetzt wird, wobei der Querschnitt der Abdeckung (2) komplementär zu dem Querschnitt des rohrförmigen Körpers (12) ist, und die Abdeckung (2) weist einen inneren Kopf (21) auf, der teilweise offen ist, durch den der rohrförmige Körper (12) durchpasst, um der Abdeckung (2) zu gestatten, auf dem rohrförmigen Kern (1) angeordnet zu werden, um den letzteren abzudecken, während der teilweise offene innere Kopf (21) eine stabile Verbindung innerhalb der ringförmigen Rille (13) einführt und durch das Öffnungsende des Behälters (C) angepasst ist, wobei die Abdeckung (2) ebenso einen geschlossenen äußeren Kopf (22) umfasst, der an dem äußeren Ende des rohrförmigen Körpers (12) haftet und durch den Boden (G) des Behälters (C) angepasst ist, was dem letzteren eine entsprechende Form gibt, während der teilweise offene innere Kopf (21) der Abdeckung (2) eine transversale erste äußere ringförmige Lippe (23) und eine zweite innere ringförmige Lippe (24) umfasst, die jeweils mit der unteren Oberfläche (14) und mit der oberen Oberfläche (15) der ringförmigen Rille (13) des rohrförmigen Kerns (1) verbunden sind und daran haften, was zwischen den beiden Lippen eine dichtsichere Kammer (25) definiert, während die Kammer (26) durch das Loch (16) in Verbindung mit dem Versorgungssystem (V) gesetzt werden kann.

2. Vorrichtung gemäß Anspruch 1, **dadurch gekennzeichnet, dass** der Boden (11) des rohrförmigen Kerns (1) mindestens eine Hauptleitung (3) aufweist, die das Innere des rohrförmigen Körpers (12) des rohrförmigen Kerns (1) in Verbindung mit der Außenseite während des Förderns des Unterstützungselements (S) zu der rohrförmigen Element (T)-Ausbildestation (A) und zu der Schließstation (B) setzt, wobei das äußere Ende des rohrförmigen Elements (T) geschlossen ist, um einen Boden (G) zu definieren, um einen offenen Behälter (C) auszubilden, während es mit dem unter Druck gesetzten Fluidversorgungssystem (V) verbunden ist, wenn das Unterstützungselement (S) durch die Förderbahn (L) in der Formstation (D) und innerhalb der Form (E) angeordnet ist.

3. Vorrichtung gemäß Anspruch 2, **dadurch gekennzeichnet, dass** die Hauptleitung (3) eine zusätzliche Zweigleitung (31) aufweist, die in das Loch (16) in der ringförmigen Rille (13) des rohrförmigen Kerns (1) öffnet und die mit der dichtsicheren Kammer (25) in Verbindung steht, während das unter Druck gesetzte betriebsbereite Fluid durch die zusätzliche Zweigleitung (31) fließt, nachdem es in die Hauptleitung (3) durch das Versorgungssystem (V) eingeführt wurde, um die dichtsichere Kammer (25) zu deformieren, um so ihre äußeren lateralen Wände zu weiten und die lateralen Wände des offenen Endes (CA) des Behälters (C) gegen die inneren Wände der Form (E) zu bewegen, um seinen passenden Sitz sicherzustellen.

4. Vorrichtung gemäß einem der Ansprüche 1 bis 3, **dadurch gekennzeichnet, dass** das Versorgungssystem (V), das zugehörig zu der Formstation (D) ist, ein hydraulisches Versorgungssystem umfasst und in der das betriebsbereite Fluid ein Fluid in einem flüssigen Zustand ist.

5. Vorrichtung gemäß einem der Ansprüche 1 bis 3, **dadurch gekennzeichnet, dass** das Versorgungssystem (V), das zugehörig zu der Formstation (D) ist, ein pneumatisches Versorgungssystem aufweist und in der das betriebsbereite Fluid ein Fluid in einem gasförmigen Zustand ist.

6. Vorrichtung gemäß einem der Ansprüche 1 bis 3, **dadurch gekennzeichnet, dass** die Form (E) der Formstation (D) zwei Halbschalen (E1) und (E2) aufweist, die aneinander befestigt werden können, um die lateralen Wände des offenen Behälters (C) zu umfassen, dessen innere Wände (F) gemäß dem gewünschten Profil geformt sind, das den lateralen Wänden des Behälters (C) zu geben ist, während die Form (E) ebenso ein oberes Schließelement (E3) aufweist, das abgesenkt werden kann.

7. Vorrichtung gemäß Anspruch 6, **dadurch gekennzeichnet, dass** die Form Heizmittel und Kühlmittel umfasst.

8. Vorrichtung gemäß einem der Ansprüche 1 bis 3, **dadurch gekennzeichnet, dass** sie eine Sterilisierstation (Z) aufweist, die zwischen der Formstation (D) und der Ausbildestation (A) angeordnet ist und durch die die Unterstützungselemente (S) bewegt durch die Förderbahn (L) laufen, so dass die Abdeckung (2) sterilisiert wird.

## Revendications

1. Appareil pour fabriquer et former un récipient à partir d'un matériau en film déroulé à partir d'une bobine relative, comprenant :
une chaîne de transport sans fin (L) prévue avec des éléments de support (S) allongés, espacés et actionnés pour transporter chacun des éléments de support (S) aux stations de travail successives agencées afin de faire face à la chaîne (L), lesdites stations comprenant une station de fabrication (A) d'élément tubulaire (T), dans laquelle un élément tubulaire (T) est fabriqué et coupé à partir dudit matériau et est fixé sur un élément de support (S) correspondant, une station de fermeture (B) dans laquelle l'extrémité externe dudit élément tubulaire (T) est fermée pour définir un fond (G) afin de fabriquer un récipient ouvert (C), et une station de formage (D) ayant un moule refermable (E), à l'intérieur duquel le récipient (C) est inséré et contenu, et à l'intérieur duquel les parois latérales du récipient (C) sont formées en utilisant un fluide sous pression de travail introduit dans le moule (E) par un système d'alimentation (V), associé à la station de formage (D), avec ledit appareil (100) **caractérisé en ce que** chacun desdits éléments de support (S) comprend :
un noyau rigide tubulaire (1) placé en communication avec ledit système d'alimentation (V) lorsqu'il est placé dans ladite station de formage (D) et ayant des trous (10) pratiqués dans ses parois latérales pour le passage dudit fluide de travail ; et
un couvercle étanche élastiquement déformable (2) pour entourer et recouvrir, tout en étant dans une condition de repos, le noyau tubulaire (1), adhérant à et se couplant à ses parois latérales, ledit couvercle (2) étant fixé par ledit élément tubulaire (T) pour fabriquer ledit récipient ouvert (C) et subissant une déformation élastique lorsque ledit récipient (C) est situé dans la station de formage (D) et à l'intérieur du moule (E), en raison de l'introduction, par le système d'alimentation (V) du fluide de travail sous pression dans le noyau tubulaire (1) afin de se détacher du noyau tubulaire (1) et d'accompagner les parois latérales dudit récipient (C), les faisant adhérer et se coupler avec les parois formées internes (F) dudit moule (E), afin de prendre un profil correspondant, ledit couvercle (2) reprenant également, suite à la désactivation du système d'alimentation, sa position de repos initiale, dans laquelle il adhère à et se couple avec les parois latérales du noyau tubulaire (1) à nouveau, avec ledit noyau tubulaire (1) qui comprend une base (11) fixée sur ladite chaîne de transport (L), et un corps tubulaire (12) qui a une forme allongée et une section transversale correspondant à la section transversale du récipient (C) à obtenir, et qui a les trous (10) pratiqués dans les parois latérales relatives pour permettre au fluide de travail de passer, ledit noyau tubulaire (1) ayant également une rainure annulaire (13) située entre la partie supérieure de la base (11) et la partie inférieure du corps tubulaire (12) ayant un trou (16) destiné à être placé en communication avec ledit système d'alimentation (V) et avec ledit couvercle (2) qui a la section transversale complémentaire à la section transversale dudit corps tubulaire (12) et ayant une tête interne (21) partiellement ouverte, à travers laquelle ledit corps tubulaire (12) passe pour permettre au couvercle (2) d'être positionné sur le noyau tubulaire (1) afin de recouvrir ce dernier, ladite tête interne (21) partiellement ouverte s'introduisant selon un raccordement stable à l'intérieur de ladite rainure annulaire (13) et étant installée par l'extrémité ouverte dudit récipient (C), ledit couvercle (2) ayant également une tête externe fermée (22) qui adhère sur l'extrémité externe dudit corps tubulaire (12) et étant installée par le fond (G) du récipient (C), donnant à ce dernier une forme correspondante, ladite tête interne (21) partiellement ouverte dudit couvercle (2) comprenant une première lèvre annulaire externe (23) transversale et une seconde lèvre annulaire interne (24), qui impliquent et adhèrent respectivement sur la surface inférieure (14) et sur la surface supérieure (15) de ladite rainure annulaire (13) du noyau tubulaire (1) définissant entre les deux lèvres, une chambre étanche (25), avec ladite chambre (26) qui peut être placée en communication avec ledit système d'alimentation (V) à travers ledit trou (16).

2. Appareil selon la revendication 1, **caractérisé en ce que** la base (11) dudit noyau tubulaire (1) a au moins un conduit principal (3) qui place l'intérieur du corps tubulaire (12) du noyau tubulaire (1) en communication avec l'extérieur pendant le transport de l'élément de support (S) vers la station de fabrication (A) d'élément tubulaire (T) et vers la station de fermeture (B), dans lequel l'extrémité externe dudit élément tubulaire (T) est fermée pour définir un fond (G) afin de former un récipient ouvert (C), alors qu'il est raccordé au système d'alimentation de fluide sous pression (V), lorsque l'élément de support (S) est positionné par ladite chaîne de transport (L) dans la station de formage (D) et à l'intérieur du moule (E).

3. Appareil selon la revendication 2,**caractérisé en ce que** ledit conduit principal (3) a un conduit de ramification supplémentaire (31) qui s'ouvre dans ledit trou (16) dans la rainure annulaire (13) dudit noyau tubulaire (1) et qui communique avec ladite chambre étanche (25), ledit fluide de travail sous pression passant par ledit conduit de ramification supplémentaire (31) après avoir été introduit dans ledit conduit principal (3) par ledit système d'alimentation (V) pour déformer ladite chambre étanche (25), afin de dilater ses parois latérales externes et de déplacer les parois latérales de l'extrémité ouverte (CA) du récipient (C) contre les parois internes du moule (E), pour garantir son étanchéité.

4. Appareil selon l'une quelconque des revendications 1 à 3, **caractérisé en ce que** ledit système d'alimentation (V) associé à ladite station de formage (D), comprend un système d' alimentation hydraulique et **en ce que** le fluide de travail est un fluide dans un état liquide.

5. Appareil selon l'une quelconque des revendications 1 à 3, **caractérisé en ce que** ledit système d'alimentation (V) associé à ladite station de formage (D) comprend un système d' alimentation pneumatique et **en ce que** le fluide de travail est un fluide dans un état aériforme.

6. Appareil selon l'une quelconque des revendications 1 à 3, **caractérisé en ce que** ledit moule (E) de ladite station de formage (D) comprend deux demi-coques (E1) et (E2) qui peuvent être serrées ensemble pour enfermer les parois latérales dudit récipient ouvert (C), dont les parois internes (F) sont formées selon le profil souhaité à donner aux parois latérales du récipient (C), ledit moule (E) comprenant également un élément de fermeture supérieur (E3) qui peut être abaissé.

7. Appareil selon la revendication 6, **caractérisé en ce que** ledit moule comprend des moyens de chauffage et des moyens de refroidissement.

8. Appareil selon l'une quelconque des revendications 1 à 3, **caractérisé en ce qu'**il comprend une station de stérilisation (Z) située entre la station de formage (D) et la station de fabrication (A) et à travers laquelle les éléments de support (S) passent, déplacés par la chaîne de transport (L), de sorte que le couvercle (2) est stérilisé.
